# EUROPÄISCHE PATENTSCHRIFT

(11) **EP 1 588 451 B1**
(45) Veröffentlichungstag und Bekanntmachung des Hinweises auf die Patenterteilung: **21.05.2008**
(21) Anmeldenummer: 03717306.9
(22) Anmeldetag: 15.04.2003
(51) Int. Cl.: H01M 10/40

(54) **VERFAHREN ZUM HERSTELLEN VON LITHIUM-POLYMER-ZELLEN AUS MINDESTENS EINER ALS FOLIENBAND VORGEFERTIGTEN ANODEN- UND KATHODENMASSE**
METHOD FOR PRODUCING LITHIUM-POLYMER CELLS CONSISTING OF AT LEAST ONE ANODIC AND ONE CATHODIC SUBSTANCE, PRE-FABRICATED IN THE FORM OF A FILM STRIP
PROCEDE DE PRODUCTION DE PILES LITHIUM-POLYMERE CONSTITUEES D'UNE SUBSTANCE ANODIQUE ET D'UNE SUBSTANCE CATHODIQUE PREFABRIQUEES EN FORME DE BANDES MINCES

(30) Priorität: 16.04.2002 DE 10216677
(43) Veröffentlichungstag der Anmeldung: 26.10.2005
(73) Patentinhaber: Dilo Trading AG, 6300 Zug (CH)
(72) Erfinder: NAARMANN, Herbert, 67227 Frankenthal (DE); KRUGER, Franz, Josef, 65817 Eppstein (DE); THEUERKAUF, Stefan, 99734 Nordhausen (DE)
(74) Vertreter: TBK-Patent
(86) Internationale Anmeldenummer: PCT/EP2003/003933
(87) Internationale Veröffentlichungsnummer: WO 2003/088376

(56) Entgegenhaltungen:
- WO-A-01/43210
- WO-A-01/82403
- DE-A- 10 118 639
- US-A- 5 460 904
- US-A- 5 688 293
- US-B1- 6 287 722

## Beschreibung

Die Erfindung betrifft ein Verfahren zum Herstellen von Lithium-Polymer-Zellen aus mindestens einer als Folienband vorgefertigten Anoden- und Kathodenmasse mit integriertem Elektrolyt und einer dazwischenliegenden isolierenden pastösen Zwischenphase als Separator.

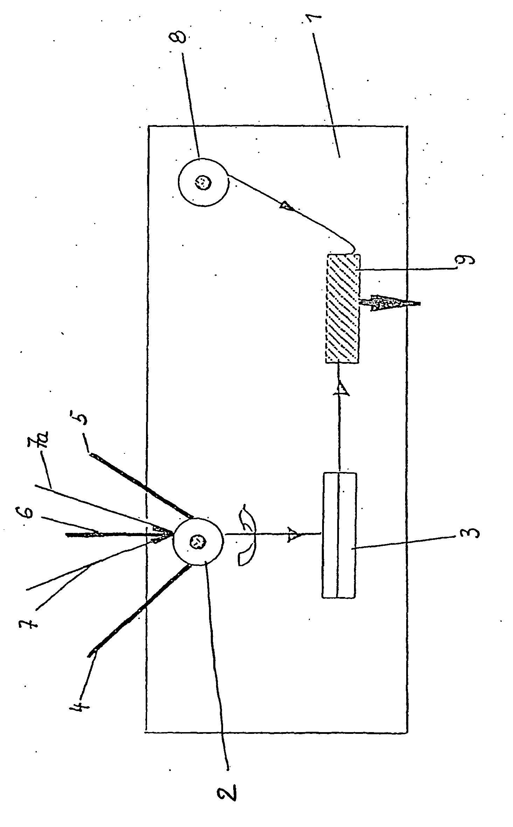

In Lithium Ion Batteries edit. M. Wakihara et O.Yamamoto Wiley-VCH, Weinheim 1998, S. 235 und Fig. 10.9 wird beispielsweise ein Herstellungsverfahren für eine Pli Polymer-Lithium Ion-Batterie beschrieben, nach dem die Aktivierung der Grenzflächen durch einen mehrstufigen Prozeß realisiert wird, der
1. aus dem Laminieren der Zellkomponenten unter Verwendung eines "plasticizers-added" Elektrolyten und
2. aus dem Entfernen des "plasticizers" und anschießendem Zuführen eines flüssigen Elektrolyten
besteht. Nachteilig bei diesem Verfahren ist zum einen das aufwendige Entfernen des "plasticizers" und das anschließende Zusetzen des flüssigen Elektrolyten zum fertigen Batteriesystem und zum anderen, daß die nach diesem Verfahren hergestellten Batteriesysteme nur eine geringe Zyklen-Kapazität aufweisen.

Es sind auch Verfahren bekannt, bei denen ein fester Polymer-Elektrolyt als Zwischenschicht zwischen den Elektrodenschichten laminiert wird. Ein dafür geeigneter Polymer-Elektrolyt ist beispielsweise in der WO 00/16421 beschrieben. Dieser Polymer-Elektrolyt besteht aus einem Gemisch von 3 verschiedenen festen Polymeren, wobei das erste Polymer eine gute Haftung und Ionenleitfähigkeit, das zweite Polymer eine gute Verträglichkeit mit einem organischen Lösungsmittel aufweist und das dritte Polymer eine gute mechanische Festigkeit vermittelt. Dieses Polymergemisch wird mit einem organischen Lösungsmittel-Elektrolyt 10-120 min. bei 100 bis 180°C erhitzt. Das erhaltene hochviskose Gemisch wird durch Aufrakeln zu einer Elektrolytschicht verarbeitet und als Zwischenschicht zwischen die Elektrodenschichten beim Herstellen einer Lithium-Polymer-Zelle eingesetzt.

US-A-5 688 293 offenbart ein Verfahren zur Herstellung von Lithium-Polymer-Zellen. Der Separator besteht aus einem ersten Separatorfilm 112 (mechanische Stabilität), der zusätzlich mit einer Elektrolyt enthaltenden pastösen Separatorphase beschichtet wird und dann mit den Elektroden laminiert. Es offenbart ferner die Herstellung des Rundwickelzellenverbunds gemäß Ansprüche 2 bis 4 der Anmeldung und die Herstellung des Separatorfilms gemäß Anspruch 12 der Anmeldung.

Schließlich ist aus der DE 100 20 031 A1 ein Verfahren zur Herstellung von. Lithium-Polymer-Batterien bekannt, nach dem die separat hergestellten Elektrodenaktivmassen und der Polymer-Gel-Elektrolyt, der aus einem Polymer-Gemisch und einer Leitsalzlösung besteht, weitgehend zusammengeführt und die Anode, der Polymer-Gel-Elektrolyt und die Kathode gleichzeitig laminiert werden. Problematisch ist hierbei, die bei der erforderlichen Verarbeitungstemperatur hohe Flüchtigkeit der verwendeten Elektrolyt-Komponenten, wie z.B. der linearen Carbonate wie u.a. Dimethyl-, Diethylcarbonate und die thermische Empfindlichkeit der Leitsalze. Aber auch die moderneren Elektrolytlösungen enthalten Additive, die eine längere termische Belastung nicht überstehen. Nachteilig ist aber auch, daß bei den erforderlichen Verarbeitungstemperaturen der Elektrolyt zu Korrosionserscheinungen führen kann, die somit korrosiv zersetzend wirken. Folglich ist bei der Durchführung eines derartigen Verfahrens sehr sorgfältig auf die Materialbeschaffenheit und den erforderlichen Temperaturverlauf bei der Verarbeitung zu achten. Darüber hinaus sind die hergestellten Massen nicht in der Lage, eine ausreichende Menge an Leitsalzlösung zu binden.

Aufgabe der vorliegenden Erfindung ist es daher, ein Verfahren zur Verfügung zu stellen, mit dem die Zyklen-Kapazität verbessert wird, auf ein Entfernen des "plasticizers" oder ähnlicher Beschichtungen verzichtet werden kann, ein nachträgliches Einfüllen von batterieäquaten Elektrolyten zur Aktivierung des Batteriesystems unnötig ist und die thermische Belastung der Elektrolytlösung in unbedenklichen Grenzen gehalten werden kann.

Diese Aufgabe wird erfindungsgemäß dadurch gelöst, daß
- das Folienband der Anodenmasse und der Kathodenmasse sowie der Separator und mindestens ein zusätzlicher Elektrolytstrom gemäß Anspruch 1 kontinuierlich und getrennt einer gekapselten Prozessoreinheit zugeführt werden,
- in der Prozessoreinheit die Anodenmasse, der.Separator und die Kathodenmasse zusammengeführt und unmittelbar vor dem Zusammenführen der Separator mindestens einseitig mit dem Elektrolytstrom beaufschlagt und gefüllt wird,
- die zusammengeführte Anodenmasse mit dem Separator und der Kathodenmasse zu einem Zellenverbund gepreßt wird,
- dieser Zellenverbund in einer zellenäquaten Form eingehaust, elektrisch kontaktiert, verschweißt sowie mit Verpackungsmaterial versehen wird, und
- die fertige Lithium-Polymer-Zelle aus der Prozessoreinheit ausgetragen wird.

Durch diese Verfahrensweise wird gewährleistet, daß während des Wickel- bzw. Preßvorgangs von Anode, Separator und Kathode der Elektrolyt, d.h. Leitsalz plus Lösungsmittel, verfahrensbedingt direkt zwischen die Anode und Kathode gewickelt bzw. gepreßt wird, so daß eine aus der Prozessoreinheit ausgetragene Lithium-Polymer-Zelle bereits aktiviert ist. Damit sind "plasticizer" oder ähnliche zu entfernende Komponenten, die nach dem Entfernen die Voraussetzung zum Einfüllen des Elektrolyten schaffen sollen, nicht mehr erforderlich. Vielmehr, bei einem nach diesem Verfahren hergestellten Batteriesystem hat sich überraschend gezeigt, daß infolge des verfahrensbedingt eingebrachten Elektrolyten, die Lithium-Polymer-Zelle über eine verbesserte und stabilere Haftung zwischen den Zellenkomponenten verfügt, wodurch eine wesentlich erhöhte Zyklenstabilität erreicht wurde.
Mit dieser Verfahrensdurchführung wird auch die thermische Belastung auf den Elektrolyten in den zulässigen und unbedenklichen Grenzen gehalten. Folglich sind auch thermisch empfindliche oder Additive enthaltende Elektrolyten, die bekanntlich zur Verbesserung eines Batteriesystems beitragen; bedenkenlos einsetzbar. Schließlich kann auf eine einfache Art und Weise entweder mit vorgehaltenen Elektroden- und Separatorfolien oder ausgehend von der Mischung der Zellenelementen das Herstellungsverfahren kontinuierlich bis zum aktivierten Lithium-Polymer-Batteriesystem mit einer hohen qualitativen und stabilen Zellenqualität durchgeführt werden.

Vorteilhafterweise werden die Folienbänder der Anoden- und Kathodenmasse mit dem Separator in der Prozessoreinheit über eine Walzen- und Wickelkombination zusammengeführt und zu einem Rundwickel-Zellenverbund gewickelt. Die Walzen- und Wickelkombination, die nicht Gegenstand der Erfindung ist, ist eine speziell ausgelegte Einheit, die.in den unterschiedlichsten Ausführungen ausgebildet sein kann.

Vorteilhaft ist auch, wenn die in der Prozessoreinheit integrierte Wickelstation, die Bestandteil der Walzen- und Wickelkombination ist, eine Rundwickel-Zelleneinheit ist, als eine unter Druck betriebene Einheit ausgelegt ist. Auf diese Weise kann der Rundwickel-Zellenverbund direkt unter Druck hergestellt werden und auf eine zusätzliche Preßvorrichtung kann verzichtet werden.

Als vorteilhaft hat sich auch erwiesen, wenn das Wickeln des Rundwickel-Zellenverbunds kernlos durchgeführt wird. Damit kann das Volumen des Rundwickel-Zellenverbunds auf das Minimum beschränkt und aus technischer Sicht das Wikkeln unter Druck vereinfacht in der gekapselten Prozessoreinheit durchgeführt werden.

Mit diesem Verfahren und dem vorgeschlagenen Wickelkonzept sind bei der entsprechenden technischen Auslegung der Prozessoreinheit mit den integrierten Verfahrenseinheiten auf eine einfache Art alle denkbaren Wickelprozesse (WP) durchführbar. Folglich kann ein Wickel u.a. problemlos einfach, doppeltbeschichtet, bifilar oder als Bi-Zelle oder invers gewickelt werden.

Vorteilhaft ist auch, wenn das Verfahren in der Prozessoreinheit unter Intergas, vorzugsweise Argon durchgeführt wird, um mögliche schädliche Einflüsse, die trotz der gekapselten Prozessoreinheit nicht immer völlig auszuschliessen sind, während dem Verfahrensablauf mit Sicherheit zu vermeiden.

Das Preßwerkzeug oder die unter Druck betriebene Wickeleinrichtung kann in einem Temperaturbereich zwischen 40 bis 250°C, vorzugsweise zwischen 60 bis 90°C heizbar betrieben werden.

Die Anoden- bzw. Kathodenmassen werden mit Ableiterfolien, wie Netzen oder Carbonfasern, Kupfer für die Anode und Aluminium für die Kathode, vorzugsweise geprimert, der Prozessoreinheit zugeführt.

Der Prozessoreinheit wird ein Elektrolyt zugesetzt, der aus Leitsalz, wie LiPF₆, Li-organoborate, Li-Trifluorosulfonylimide und aprotischen Lösungsmitteln, vorzugsweise Alkyl-, Ethylen-, Dimethyl-,Diethylcarbonaten für sich oder im Gemisch, gegebenenfalls mit niedermolekularen Fluorga. Kohlenwasserstoffen und Zusätzen wie MgO, Al₂O₃ oder organ. Polymeren wie Fluorelastomeren, Styrolopolymeren, Polyvinylpyrrolidon, Polyvinylacetate oder Polyvinylethern besteht. Vorteilhaft ist, wenn der Elektrolyt Leitsalz in Mengen zwischen 4,5 bis 25 Gew% und aprotische Lösungsmittel in Mengen zwischen 75 bis 95 Gew% enthält.

Der zur Anwendung kommende Separator enthält 10 bis 50 Gew% von Fluorelastomeren, Polyolefine oder Styrol-Butadien-Blockpolymeren und einen Elektrolyten, der aus Leitsalz in Mengen zwischen 4,5 bis 25 Gew% und aprotischen Lösungsmitteln in Mengen zwischen 75 bis 95 Gew% besteht.

Als vorteilhaft hat sich erwiesen, wenn der Anoden- und der Kathodenmasse zusätzlich Carbonfasern in Mengen zwischen 0,1 bis 5 Gew% zugesetzt werden. Auf diese Weise kann die Aufnahmefähigkeit der Anoden- und Kathodenmasse für den Elektrolyten beim Pressen oder Wickeln des Zellenverbunds günstig beeinflußt werden.

Die Herstellung der Separatormasse kann bei einer Temperatur zwischen 70 bis 150°C erfolgen, wobei sich ein Temperaturbereich zwischen 75 bis 110°C als bevorzugt erwiesen hat.

Schließlich ist es vorteilhaft, wenn dem Separator bevorzugt LiPF₆ als Leitsalz und Alkylcarbonate sowie Perlfuoralkylether als Lösungsmittel zugeführt wird.

Die wesentlichen Vorteile des Verfahrens bestehen darin, daß die Lithium-Polymer-Zelle mit dem Elektrolyten, Leitsalz plus Lösungsmittel, unmittelbar vor dem Zusammenfügen bzw. Wickelprozeß von Kathode und Anode mit der isolierenden Zwischenschicht, dem Separator, befüllt wird und damit bereits beim Austragen aus der Prozessoreinheit aktiviert ist. Auf einen "plasticizer" und auf das aufwendige Entfernen des "plasticizers" zum Einfüllen des Elektrolyten in die Lithium-Polymer-Zelle kann folglich verzichtet werden. Ein weiterer wesentlicher Vorteil des erfindungsgemäßen Verfahrens ist auch, daß der Separator mit dem Elektrolyten in einem Verfahrensschritt befüllt wird, bei dem eine Verfahrenstemperatur oder eine kurzzeitige Temperaturerhöhung beim Pressen vorherrschen kann, die sowohl für Elektrolyt-komponenten allgemein als auch für thermisch empfindliche Leitsalze, wie z.B. LiPF₆ aber auch für Additive, wie z.B. Vinylcarbonat zur Verbesserung der Filmbildung auf der Anode, völlig unbedenklich sind.

Der erfindungsgemäße Verfahrensablauf zur Herstellung von Lithium-Polymer-Zellen, das in der beigefügten Zeichnung schematisch in einer bevorzugten Durchführungsform dargestellt ist, sowie die Herstellung und Zusammensetzung der dafür bevorzugt verwendeten Anoden-, Kathodenmasse sowie der isolierenden Zwischenmasse, dem Separator, wird nachfolgend näher beschrieben.

Wie in der schematischen Darstellung gezeigt, besteht eine gekapselte Prozessoreinheit 1 zur Durchführung des Verfahrens im wesentlichen aus einer speziell dafür ausgebildeten Walzen- und Wickelkombination 2, einer beheizbaren Pressvorrichtung 3, einer Zuführungseinrichtung 8 für Verpakkungsmaterial und einer Einrichtung 9 zum Einhausen, Verschweißen, Kontaktieren und Austragen der Lithium-Polymer-Zelle.

Die Anodenmasse, Kathodenmasse und der Separator, die in der nachfolgend beschriebenen bevorzugten Zusammensetzung für das Verfahren Anwendung finden, werden entweder in getrennten und für Polymermischungen geeigneten kontinuierlichen Mischern in bekannter Weise hergestellt oder getrennt in einem diskontinuierlichen Mischer gemischt. Diese Mischungen werden bei der kontinuierlichen Herstellung über Austragsdüsen der Mischer oder bei diskontinuierlicher Herstellung über Breitdüseneinrichtungen bevorzugt in Form von Folienbändern mit der entsprechenden Breite und einer bevorzugten Schichtdicke von 80 bis 90 µm für die Kathodenmasse, 110 bis 120 µm für die Anodenmasse und 6 bis .10 µm für den Separator ausgeformt und getrennt der Prozessoreinheit 1 zugeführt.

Die entsprechend den bekannten Herstellungsverfahren aufbereiteten Folienbänder der Anodenmasse 4, Kathodenmasse 5 werden vor der Zuführung zur Prozessoreinheit 1 auf ihren jeweiligen Ableitern fixiert, die vorzugsweise für die Kathodenmasse 5 aus geprimerter Al-Folie oder Al-Netzen und für die Anodenmasse 4 aus blanker oder oberflächenbehandelter Cu-Folie oder Cu-Netze bestehen. Die mit Ableitern versehene Anodenmasse 4 sowie Kathodenmasse 5 sowie dem dazwischen vorgesehenen Separator 6 werden der Prozessoreinheit 1 und der darin enthaltenen Walzen- und Wickelkombination 2 getrennt zugeführt. Unmittelbar vor der Walzenstation der Walzen- und Wickelkoinbination 2 wird bevorzugt beiderseits des Separators 6 der aufbereitete Elektrolytstrom 7, 7a zugeführt, der den Separator 6 vollständig oder zusätzlich mit dem Elektrolyten benetzt bzw. befüllt.

Das Zusammenführen und Wickeln der Anodenmasse 4, Kathodenmasse 5 und dem mit Elektrolyt benetzten bzw. gefüllten Separator 6 erfolgt über die Walzen- und Wickelkombination 2 bei einer Verarbeitungsgeschwindigkeit von ca. 100 m/Std in einem gekapselten Sektor, der mit trockenem Argon als Schutzgas gefüllt ist.

Die zusammengeführten Massen werden in der Wickelstation bevorzugt kernlos gewickelt, anschließend in der Pressvorrichtung 3 verdichtet. Es ist aber auch möglich die zusammengeführten Massen dadurch zu verdichten, daß der Wickelprozeß unter einem entsprechenden Druck durchgeführt wird.

Die Pressvorrichtung 3 ist vorteilhaft beheizbar ausgeführt, so daß in Abhängigkeit der Materialanforderungen das Pressen in einem Temperaturbereich zwischen 40 bis 250°C, vorzugsweise 60 is 90°C gearbeitet werden kann.

Nach dem Verdichten werden die verbundenen Massen der Einrichtung 9 zugeführt, die von einer Zuführungseinrichtung 8 mit einem Verpackungsmaterial bevorzugt DNP-Japan, das über vorgefertigte Taschen bzw. Kammern verfügt, versorgt wird. In der Einrichtung 9 werden die verbundenen Massen in der batterieadäquaten Form eingehaust, kontaktiert und mit dem zugeführten Verpackungsmaterial, das in der gleichen Arbeitsgeschwindigkeit zugeführt wird, verschweißt und die Lithium-Polymer-Zelle als aktiviertes Batteriesystem ausgetragen.

Die eingesetzte Anodenmasse kann enthalten:
a) 55-85 Gew%, vorzugsweise 60-70 Gew% Li-interkalationsfähigen Graphit, bevorzugt synthischer Graphit, wie z.B. MCMB^{®} mit sphärischem Aufbau,
b) Polymerbinder, wie Polyflurelastomeren, sind bevorzugt Copolymere, wie Polyvinylidenfluorid, Hexafluorpropylen und Tetraflourethylen und/oder Perfluoralkoxylether-Dervivate z.B. Dyneon THV^{®} oder PFA^{®}, Polyolefine, Polystyrolen, Polybutadien (Isopren) Styraol-Kautschuk, z.B. Styroflex^{®}, Poly(meth)acrylat mit Alkoholresten C₄ bis C₂₀ mit Mengen von 5-15 Gew%, vorzugsweise 7,5-12,5 Gew%, einzeln oder auch im Gemisch davon,
c) Poly(N-vinyl)verbindungen, Polyvinylpyrrolidon, Polyvinylimidazol Polyvinylpyridin und deren Copolymerisate z.B. mit Alkyl (Meth)arcylester mit Alkoholresten- C₄ bis C₂₀ sowie Vinylether in Mengen von 2-15 Gew%, vorzugsweise 3-12,5 Gew% bezogen auf die gesamte Anodenmasse einzeln oder im Gemisch davon,
d) aprotische Lösungsmittel, z.B. vorzugsweise Alkylcarbonaten z.B. Ethylen-, Diethyl- Dimethylcarbonaten oder fluorhaltige Lösungsmittel entsp. EP 0807 986 A1, die als sicherheitsbedingte Bestandteile der Lösungsmittel und zur Reduzierung der Viskosität dienen, in Mengen von 10-60 Gew%, vorzugsweise 25-50Gew%. Es können aber auch Bi- oder Ternäre Gemische von aprotischen Lösungsmitteln eingesetzt werden.

Die eingesetzte Kathodenmasse kann enthalten:
e) Ein interkalationsfähiges Schwermetalloxid, wie Li-Cobaltoxid und auch Zusätze von LiMnoxid, LiNioxid aber auch Zusätze wie Wolframate, Molybdate, Titanate in Mengen von 50-65 Gew%, vorzugsweise 55-65 Gew%. Zur Verbesserung der Leitfähigkeit enthält die Kathodenmasse zusätzlich ein elektronisch leitfähiges Material wie Ruß, Polypyrrol, Polyanilin, Metallpulver oder Whisker von Ti, Ag oder andere Metalle, die nicht in dem System korrodierenden in Mengen von 1-20 Gew%, vorzugsweise 5-18 Gew%.

Die in der Kathodenmasse verwendeten und notwendigen Zusätze entsprechen in der Art und Menge der in der Anodenmasse genannten Elemente b) Polymerbinder, c) Polyvinylverbindungen und d) aprotische Lösungsmittel.

Die unter a) erwähnten Polyfluorelastomere sind z.B. in Adv. Mater. 1998, 10 Nov. 15 p 1211 oder in Ullmanns Encyclopedia of Industrial Chemistry A 11, p.393-427 beschrieben und dienen als so genannte HF-Fänger und können auch in den oben angegebenen Mengen Bestandteil der Anoden- und Kathodenmasse sein.

Als Leitsalze finden die im Handbook of Batterie Materials edit, I. O. Besenhard, Verlag, Wiley-VCH, Weinheim 1999, Seite 462/463 genannten Komponenten Anwendung. Vorzugsweise werden LiPF₆, Liorganoborate sowie Li-trifluoromethylsulfonylimide und Dervitate bzw. Analoga eingesetzt, wobei das bevorzugte Leitsalz LiPF₆ ist, das in Mengen von 2-20 Gew% gegebenenfalls 1 M gelöst über den Separator eingebracht wird. Die angegebenen Gew% beziehen sich dabei auf die Gesamtmenge des Separators.

Der eingesetzte Separator wird bevorzugt mit einem kontinuierlichen Mischer, z.B. mit einem Extruder hergestellt. In einem Voith Mischer wird die Masse vorgemischt, für die Perfluorelastomere, vorzugsweise Dyneon THV^{®} entsprechend der Anodenmasse, in einer Mengen von 10-50 Gew%, vorzugsweise 15-35 Gew% eingesetzt werden. Dazu kommt ein zusätzlicher Binder, z.B. ein Butadien/Styrol Copolymer, wie Styroflex^{®} in einer Menge von 1-5 Gew% sowie anorganische Zusätze wie MgO, Al₂O₃, Titanoxid, Li₂O in Mengen von 2-10 Gew%, die für sich oder im Gemisch eingesetzt werden können.

Dieses Gemisch wird bevorzugt in einem Extruder vom Typ Collins eindosiert. Parallel dazu werden Dispersionen von LiPF₆ (4,5-25 Gew%) mit MgO (0,5-2 Gew%) in aprotischen Lösungsmitteln, z.B. Gemischen aus Ethylencarbonat., Diethylcarbonat und gegebenfalls Dimethylcarbonat im Verhältnis von 3:2 (3:1) in Mengen von 30-95 Gew%, vorzugsweise von 30-75 Gew% der Gesamtmenge der aprotischen Lösungsmittel zudosiert.

Die bevorzugte Extrusion erfolgt bei Temperaturen von 70-90°C, vorzugsweise bei 75-85°C.

Das Extrudat ist eine Folie mit einer Dicke von 6-10µm und einer Breite von 10-15 cm.

Diese Folie, die als Separator dient, wird dann nach dem erfindungsgemäßen Verfahren direkt zwischen der Anode und Kathode gewickelt.

Nachfolgend wird anhand eines ganz speziellen Beispiels jeweils die Zusammensetzung der Anodenmasse, der Kathodenmasse sowie der Separatormasse sowie die Masseherstellung tabellarisch dargestellt.

### Beispiel 1 - Anodenmasse

| Komponente | Ma% | | Soll (g) |
|---|---|---|---|
| MCMB 25-28^{®} | 58,78 | | 1419,6 |
| Acetylenruß | 3,41 | | 85,2 |
| Dyneon THV^{®} | 9,04 | | 226,1 |
| Styroflex^{®} | 3,01 | | 75,4 |
| (Styrol-Butadien- | | | |
| Block-polimerisat) | | | |
| EC | 11,10 | | 277,5 |
| DEC | 16,65 | | 416,3 |
| Lösungsmittel | | 693,8g | |
| Gesamtansatz | | 2500,0g | |

Diese Komponenten wurden im Kneter 1 Stunde bei einer Temperatur von 100°C und einer Drehzahl von 30 U/min geknetet. Als Lösungsmittel wurde EC/DEC verwendet.

Die geknetete Masse wurde bei 100°C im Extruder verarbeitet und dann auf geprimerte Cu-Folie gepreßt. Die Schichtdicke betrug 110-120 µm.

### Beispiel 2 - Kathoderimasse

| Komponete | Ma% | | Soll (g) |
|---|---|---|---|
| LiCo SS5^{®} | 52,32 | | 1569,7 |
| Acetylenruß | 7,85 | | 235,5 |
| Dyneon THV^{®} | 9,18 | | 275,3 |
| Styroflex^{®} | 3,06 | | 91,8 |
| (Styrol-Butadien- | | | |
| Block-polimerisat) | | | |
| EC | 9,20 | | 275,9 |
| DEC | 18,39 | | 551,8 |
| Lösungsmittel | | 827,7g | |
| Gesamtansatz | | 3000,0g | |

Diese Komponenten wurden im Kneter 2 Stunden bei einer Drehzahl von 30 U/min geknetet und zwar 90 min bei einer Temperatur von 100°C und anschließend weitere 30 min bei einer Temperatur von 60°C. Als Lösungsmittel wurde EC/DEC verwendet.

Die geknetete Masse wurde bei 100°C im Extruder verarbeitet und dann auf geprimerte Al-Folie gepreßt. Die Schichtdicke betrug 80-90 µm.

### Beispiel 3 - Separatormasse

| Komponenten | Ma% | | Soll(g) |
|---|---|---|---|
| Dyneon THV 220^{®} | 9,0 | | 226 |
| Styroflex^{®} | 3,0 | | 75,0 |
| (Styrol-Butadien- | | | |
| Block-polimerisat) | | | |
| Kynar 200^{®} | 9,0 | | 226,0 |
| EC | 45,7 | | 1143,0 |
| DEC | 16,7 | | 417,0 |
| DMC | 2,1 | | 52,0 |
| LiPF₆ | 11,1 | | 277,0 |
| | 100,0 | | 2501,0 |
| Gesamtansatz | 2501,0g | | |

Die Komponenten wurden im Kneter bei einer Temperatur von 75-80°C und einer Drehzahl von 40 U/min geknetet.

Die geknetete Masse wurde bei 100°C im Extruder verarbeitet. Die Schichtdicke betrug 6-8 µm.

Dazu Beispiele 3 - 5 und Vergleichsbeispiele 1 - 3 Die Elektroden für Knopfzellen wurden entsprechend der DE 196 42 878 (1-3) hergestellt.

Als Bindemittel diente
Polyacrylharz Vergleichsbeispiel 1,
Polyethylenoxid Vergleichsbeispiel 2 und
Polyisobuten (Oppanol B100^{®}) Vergleichsbeispiel 3

| | Vergleichsbeispiele. Beispiele | | | | | |
|---|---|---|---|---|---|---|
| | 1 | 2 | 3 | 3 | 4 | 5 |
| Spannung (V) | 4,0 | 3,8 | 4,0 | 4,2 | 4,2 | 4,2 |
| Energiedichte (Wh/kg) | 15 | 20 | ~16 | 120 | 116 | 122 |
| Zyklenstabilität | <200 | <200 | <200 | >600 | >600 | >600 |
| 3,0-4,5 V | | | | | | |
| 80 % DOD | | | | | | |

| | | | | | | |
|---|---|---|---|---|---|---|
| DOD = Depth of discharge (Entladungstiefe) | | | | | | |

Beispiel 3: Entspricht in den Massen Anode, Kathode und Separator den in den Beispielen 1 u. gemachten Angaben, hinsichtlich Mengenanteile und der prozentualen Zusammensetzung.

Beispiel 4: Enthält als Lösungsmittel in der Anodenmasse 1,1% (2,8g) NMP (N-Methylpyrrolidon), 10% (275g) EC (Ethylencarbonat) und 16,51% (416g) DEC (Diethylcarbonat).

Beispiel 5: Im Gegensatz zu den vorhergehenden Beispielen wurde die Anodenmasse auf nicht geprimerte Cu-Folie gepreßt.

### Aufstellung der Bezugszeichen

- 1: Prozessoreinheit
- 2: Walzen- und Wickelkombination
- 3: Pressvorrichtung
- 4: Anodenmasse
- 5: Kathodenmasse
- 6: Separator
- 7: Elektrolytstrom
- 7a: Elektrolytstrom
- 8: Zuführungseinrichtung Verpackungsmaterial
- 9: Einrichtung zum Einhausen, Verschweißen, Kontaktieren und Austragen der Lithium-Polymer-Zelle

## Patentansprüche

1. Verfahren zum Herstellen von Lithium-Polymer-Zellen aus mindestens einer als Folienband vorgefertigten Anoden- und Kathodenmasse mit integriertem Elektrolyt und einer dazwischenliegenden isolierenden pastösen Zwischenphase als Separatorfilm,
**dadurch gekennzeichnet, dass**
das Folienband der Anodenmasse (4) und der Kathodenmasse (5) sowie der Separator (6) und mindestens ein zusätzlicher Elektrolytstrom (7, 7a) kontinuierlich und getrennt einer gekapselten Prozessoreinheit (1) zugeführt werden,
in der Prozessoreinheit (1) die Anodenmasse (4), der Separator (6) und die Kathodenmasse (5) zusammengeführt und unmittelbar vor dem Zusammenführen der Separator (6) mindestens einseitig durch den Elektrolytstrom (7, 7a) beaufschlagt und gefüllt wird,
die zusammengeführte Anodenmasse (4) mit dem Separator (6) und der Kathodenmasse (5) zu einem Zellenverbund gepresst wird,
dieser Zellenverbund in einer zellenadäquaten Form eingehaust, elektrisch kontaktiert, verschweißt sowie mit zugeführtem Verpackungsmaterial versehen wird, und
die fertige Lithium-Polymer-Zelle aus der Prozessoreinheit (1) ausgetragen wird, wobei
ein Elektrolyt zugesetzt wird, der aus Leitsalz, aprotischen Lösungsmitteln, gegebenenfalls mit niedermolekularen fluororganischen Kohlenwasserstoffen und Zusätzen oder organischen Polymeren besteht.

2. Verfahren nach Anspruch 1,
**dadurch gekennzeichnet, dass**
die Folienbänder der Anodenmasse (4) und Kathodenmasse (5) mit dem Separator (6) in der Prozessoreinheit (1) über eine Walzen- und Wickelkombination (2) zusammengeführt und zu einem Rundwickel-Zellenverbund gewickelt werden.

3. Verfahren nach Anspruch 2,
**dadurch gekennzeichnet, dass**
der Rundwickel-Zellenverbund unter Druck hergestellt wird.

4. Verfahren nach einem der Ansprüche 2 und 3,
**dadurch gekennzeichnet, dass**
das Wickeln des Zellenverbunds kernlos durchgeführt wird.

5. Verfahren nach einem der Ansprüche 1 bis 4,
**dadurch gekennzeichnet, dass**
das Verfahren in der Prozessoreinheit (1) unter Inertgas, vorzugsweise Argon, durchgeführt wird.

6. Verfahren nach einem der Ansprüche 1 bis 5,
**dadurch gekennzeichnet, dass**
die Pressvorrichtung (3) oder die unter Druck betriebene Wickelstation in einem Temperaturbereich zwischen 40 bis 250°C, vorzugsweise zwischen 60 bis 90°C heizbar betrieben wird.

7. Verfahren nach einem der Ansprüche 1 bis 6,
**dadurch gekennzeichnet, dass**
die Anodenmasse (4) bzw. die Kathodenmasse (5) mit Ableiter-Folien, wie Netzen oder Carbonfasern, Kupfer für die Anode und Aluminium für die Kathode, vorzugsweise geprimert, der Prozessoreinheit (1) zugeführt werden.

8. Verfahren nach einem der vorhergehenden Patentansprüche, wobei das Leitsalz ausgewählt ist aus LiPF₆, Li-Organoboraten oder Li-Trifluorsulfonylimide.

9. Verfahren nach einem der vorhergehenden Patentansprüche, wobei das aprotische Lösungsmittel ausgewählt ist aus Alkyl-, Ethylen-, Dimethyl- oder Diethylcarbonaten für sich oder im Gemisch.

10. Verfahren nach einem der vorhergehenden Patentansprüche, wobei die Zusätze MgO oder Al₂O₂ sind.

11. Verfahren nach einem der vorhergehenden Patentansprüche, wobei die organischen Polymere ausgewählt sind aus Fluorelastomeren, Styrolopolymeren, Polyvinylpryrrolidon, Polyvinylacetat oder Polyvinylethern.

12. Verfahren nach einem der vorhergehenden Patentansprüche,
**dadurch gekennzeichnet, dass**
ein Elektrolyt eingesetzt wird, der Leitsalz in Mengen zwischen 4,5 bis 25 Gew.-% und aprotische Lösungsmittel in Mengen zwischen 75 bis 95 Gew.-% enthält.

13. Verfahren nach Anspruch 1,
**dadurch gekennzeichnet, dass**
ein Separator (6) eingesetzt wird, der 10 bis 50 Gew.-% von Fluorelastomeren, Polyolefine oder Styrol-Buta-dien-Blockpolymere enthält sowie einen Elektrolyten, der aus Leitsalz in einer Menge zwischen 4,5 bis 25 Gew.-% und aprotischen Lösungsmitteln in einer Menge zwischen 75 bis 95 Gew.-% besteht.

14. Verfahren nach Anspruch 1,
**dadurch gekennzeichnet, dass**
der Anodenmasse (4) und der Kathodenmasse (5) zusätzlich Carbonfasern in Mengen zwischen 0,1 bis 5 Gew.-% zugesetzt werden.

15. Verfahren nach einem der Ansprüche 1 bis 11,
**dadurch gekennzeichnet, dass**
der Separator (6) bei einer Temperatur zwischen 70 bis 150°C, vorzugsweise zwischen 75 bis 110°C, hergestellt wird.

16. Verfahren nach Anspruch 15,
**dadurch gekennzeichnet, dass**
dem Separator (6) ein Elektrolyt zugeführt wird, der LiPF₆ als Leitsalz und Alkylcarbonate sowie Perfluoralkylether als Lösungsmittel enthält.

## Claims

1. A method for manufacturing lithium-polymer cells from at least one anode and cathode composition prefabricated as a foil strip with an integral electrolyte and, located therebetween, a pasty insulating interphase as separator film,
**characterised in that**
the foil strip of the anode composition (4) and of the cathode composition (5) together with the separator (6) and at least one additional stream of electrolyte (7, 7a) are continuously and separately supplied to an enclosed processor unit (1),
the anode composition (4), the separator (6) and the cathode composition (5) are brought together in the processor unit (1) and, immediately before being brought together, at least one side of the separator (6) is impinged upon and filled by the stream of electrolyte (7, 7a),
the anode composition (4), which has been brought together with the separator (6) and the cathode composition (5), is pressed to form a compound cell, this compound cell is provided with a cell-appropriate housing, electrically contacted, heat sealed and provided with a fed packaging material, and
the finished lithium-polymer cell is discharged from the processor unit (1), wherein
an electrolyte is added which consists of conducting salt, aprotic solvents, optionally with low molecular weight fluoroorganic hydrocarbons and additives or organic polymers.

2. A method according to claim 1,
**characterised in that**
the foil strips of the anode composition (4) and cathode composition (5) are brought together with the separator (6) in the processor unit (1) by means of a roller and winder combination (2) and are wound to form a round-wound compound cell.

3. A method according to claim 2,
**characterised in that**
the round-wound compound cell is produced under pressure.

4. A method according to either one of claims 2 and 3,
**characterised in that**
the compound cell is wound without a core.

5. A method according to any one of claims 1 to 4,
**characterised in that**
the method is performed under inert gas, preferably argon, in the processor unit (1).

6. A method according to any one of claims 1 to 5,
**characterised in that**
the pressing apparatus (3) or the winding station operated under pressure is operated heatably in a temperature range of between 40 and 250°C, preferably between 60 and 90°C.

7. A method according to any one of claims 1 to 6,
**characterised in that**
the anode composition (4) or the cathode composition (5) are fed to the processor unit (1) with preferably primed discharge foils, such as meshes or carbon fibres, copper for the anode and aluminium for the cathode.

8. A method according to any one of the preceding claims, wherein the conducting salt is selected from LiPF₆, Li organoborates or Li trifluorosulfonylimides.

9. A method according to any one of the preceding claims, wherein the aprotic solvent is selected from alkyl, ethylene, dimethyl or diethyl carbonates alone or as a mixture.

10. A method according to any one of the preceding claims, wherein the additives are MgO or Al₂O₂.

11. A method according to any one of the preceding claims, wherein the organic polymers are selected from fluoroelastomers, styrene polymers, polyvinylpyrrolidone, polyvinyl acetate or polyvinyl ethers.

12. A method according to any one of the preceding claims,
**characterised in that**
an electrolyte is used which contains the conducting salt in quantities of between 4.5 and 25 wt.% and aprotic solvents in quantities of between 75 and 95 wt.%.

13. A method according to claim 1,
**characterised in that**
a separator (6) is used which contains 10 to 50 wt.% of fluoroelastomers, polyolefins or styrene-butadiene block polymers together with an electrolyte which consists of conducting salt in a quantity of between 4.5 and 25 wt.% and aprotic solvents in a quantity of between 75 and 95 wt.%.

14. A method according to claim 1,
**characterised in that**
carbon fibres are additionally added to the anode composition (4) and the cathode composition (5) in quantities of between 0.1 and 5 wt.%.

15. A method according to any one of claims 1 to 11,
**characterised in that**
the separator (6) is manufactured at a temperature of between 70 and 150°C, preferably between 75 and 110°C.

16. A method according to claim 15,
**characterised in that**
an electrolyte which contains LiPF₆ as conducting salt and alkyl carbonates and perfluoroalkyl ethers as solvents is supplied to the separator (6).

## Revendications

1. Procédé de fabrication de piles lithium-polymère, constituées d'au moins une masse d'anode et d'une masse de cathode, préfabriquées sous forme de bandes, avec un électrolyte intégré et une phase intermédiaire, pâteuse, isolante, placée en position intermédiaire et faisant office de film séparateur,
**caractérisé en ce que**
la bande de feuille de la masse d'anode (4) et de la masse de cathode (5), ainsi que le séparateur (6) et au moins un flux d'électrolyte (7, 7a) supplémentaire, sont amenés en continu et séparément à une unité de façonnage (1) encapsulée,
la masse d'anode (4), le séparateur (6) et la masse de cathode (5) sont assemblés dans l'unité de façonnage (1) et, directement avant assemblage, le séparateur (6) est sollicité, au moins sur une face, par le flux d'électrolyte (7, 7a) et rempli,
la masse d'anode (4) assemblée est pressée avec le séparateur (6) et la masse de cathode (5) pour produire un composite de pile,
ce composite de pile est façonné à une forme appropriée pour une pile, mis en contact électriquement, soudé et muni d'un matériau d'emballage fourni, et
la pile lithium-polymère achevée est expulsée de l'unité de façonnage (1), où
est ajouté est électrolyte, composé de sels conducteurs, de solvants aprotiques, le cas échéant avec des hydrocarbures fluoro-organiques à faible poids moléculaire et des additifs, ou des polymères organiques.

2. Procédé selon la revendication 1,
**caractérisé en ce que**
les bandes de feuilles, de la masse d'anode (4) et de la masse de cathode (5), avec le séparateur (6), sont assemblées dans l'unité de façonnage (1), par l'intermédiaire d'une combinaison de rouleaux et de goussets (2), et enroulées en un composite de pile en enroulement cylindrique.

3. Procédé selon la revendication 2,
**caractérisé en ce que**
le composite de pile en enroulement cylindrique est fabriqué sous pression.

4. Procédé selon l'une des revendications 2 et 3,
**caractérisé en ce que**
l'enroulement du composite cellulaire est effectué sans noyau.

5. Procédé selon l'une des revendications 1 à 4,
**caractérisé en ce que**
le procédé est mis en oeuvre dans l'unité de façonnage (1) sous gaz inerte, de préférence sous argon.

6. Procédé selon l'une des revendications 1 à 5,
**caractérisé en ce que**
le dispositif de pressage (3), ou le poste d'enroulement fonctionnant sous pression, est exploité en pouvant être chauffé dans une plage de températures comprise entre 40 et 250°C, de préférence entre 60 et 90°C.

7. Procédé selon l'une des revendications 1 à 6,
**caractérisé en ce que**
la masse d'anode (4) et/ou la masse de cathode (5) avec des feuilles à conducteurs de départ, tels que des filets ou des fibres de carbone, du cuivre pour l'anode et de l'aluminium pour la cathode, sont amenées, de préférence revêtues d'un apprêt, à l'unité de façonnage (1).

8. Procédé selon l'une des revendications précédentes, **caractérisé en ce que** le sel conducteur est sélectionné parmi LiPF₆, des organoborates de Li, ou des trifluorosulfonylimides de Li.

9. Procédé selon l'une des revendications précédentes, le solvant aprotique étant sélectionné parmi des alkyl-, éthylène-, diméthyl- ou diéthyl-carbonates, individuellement ou en mélange.

10. Procédé selon l'une des revendications précédentes, les additifs étant MgO ou Al₂O₃.

11. Procédé selon l'une des revendications précédentes, les polymères organiques étant sélectionnés parmi des fluoroélastomères, des polymères de type styrène, de la polyvinylpyrrolidone, du polyvinylacétate ou des polyvinyléthers.

12. Procédé selon l'une des revendications précédentes, **caractérisé en ce qu'**on utilise
un électrolyte contenant le sel conducteur, en des quantités comprises entre 4,5 à 25 % en poids, et un solvant aprotique, en des quantités comprises entre 75 et 95 % en poids.

13. Procédé selon la revendication 1,
**caractérisé en ce qu'**on utilise
un séparateur (6), contenant de 10 à 50 % en poids de fluoroélastomères, polyoléfines ou polymères à blocs styrène-butadiène, ainsi qu'un électrolyte composé de sels conducteurs, en une quantité comprise entre 4,5 et 25 % en poids, et de solvants aprotiques, en une quantité comprise entre 75 et 95 % en poids.

14. Procédé selon la revendication 1,
**caractérisé en ce que**
à la masse d'anode (4) et a la masse de cathode (5), sont en plus, ajoutées des fibres de carbone, en des quantités comprises entre 0,1 et 5 % en poids.

15. Procédé selon l'une des revendications 1 à 11,
**caractérisé en ce que**
le séparateur (6) est fabriqué à une température comprise entre 70 et 150°C, de préférence entre 75 et 110°C.

16. Procédé selon la revendication 15,
**caractérisé en ce que**
l'on amène au séparateur (6) un électrolyte, contenant du LiPF₆ comme sel conducteur, et des alkylcarbonates, ainsi que du perfluoralkyléther comme solvant.
